(19) Europäisches Patentamt

European Patent Office

Office européen des brevets

(11) **EP 0 916 073 B1**

(12) **FASCICULE DE BREVET EUROPEEN**

(45) Date de publication et mention
de la délivrance du brevet:
**26.11.2003 Bulletin 2003/48**

(21) Numéro de dépôt: **97935648.2**

(22) Date de dépôt: **29.07.1997**

(51) Int Cl.⁷: **G01C 23/00**, G05D 1/06

(86) Numéro de dépôt international:
**PCT/FR97/01414**

(87) Numéro de publication internationale:
**WO 98/005928 (12.02.1998 Gazette 1998/06)**

(54) **DISPOSITIF D'ASSISTANCE AU GUIDAGE D'UN VEHICULE SUR UNE TRAJECTOIRE**

HILFSVORRICHTUNG ZUR LENKUNG EINES FAHRZEUGS ENTLANG EINER TRAJEKTORIE

VEHICLE COURSE STEERING AID DEVICE

(84) Etats contractants désignés:
**DE FR GB**

(30) Priorité: **02.08.1996 FR 9609804**

(43) Date de publication de la demande:
**19.05.1999 Bulletin 1999/20**

(73) Titulaire: **THALES AVIONICS S.A.**
**78141 Vélizy Villacoublay Cédex (FR)**

(72) Inventeurs:
• **AYMERIC, Bruno, Thomson-CSF S.C.P.I.**
**94117 Arcueil Cédex (FR)**
• **PARUS, Roger, Thomson-CSF S.C.P.I.**
**94117 Arcueil Cédex (FR)**

(74) Mandataire: **Albert, Claude**
**Thomson-CSF Propriété Intellectuelle,**
**13, Avenue du Président Salvador Allende**
**94117 Arcueil Cédex (FR)**

(56) Documents cités:
**EP-A- 0 044 777**     **FR-A- 2 666 428**

• **HYNES C S ET AL: "FLIGHT EVALUATION OF PURSUIT DISPLAYS FOR PRECISION APPROACH OF POWERED-LIFT AIRCRAFT" JOURNAL OF GUIDANCE AND CONTROL AND DYNAMICS, vol. 12, no. 4, 1 juillet 1989, pages 521-529, XP000117162**
• **J.R. LOWE ET AL: "APPLICATIONS OF HEAD-UP DISPLAYS IN COMMERCIAL TRANSPORT AIRCRAFT." JOURNAL OF GUIDANCE, CONTROL AND DYNAMICS, vol. 6, no. 2, mars 1983 - avril 1983, NEW YORK, USA, pages 77-83, XP002029373**

## Description

La présente invention concerne un dispositif d'assistance au pilotage ou à la simulation du pilotage d'un véhicule. Elle s'applique principalement aux avions, mais elle peut s'appliquer aussi à toutes sortes d'autres véhicules aériens, terrestres ou marins, spécialement lorsqu'ils sont manoeuvrés dans un espace à trois dimensions. On décrira l'invention à propos du pilotage d'un avion, et en particulier du pilotage dans les phases d'atterrissage.

En pilotage manuel, le pilote agit à vue pour modifier la direction de déplacement de son véhicule à l'aide des commandes d'attitude et de moteur.

L'assistance au pilotage manuel d'un avion peut être réalisée par une visualisation, devant les yeux du pilote, de symboles représentant l'environnement terrestre et le déplacement de cet avion, ces symboles se superposant, lorsque la visibilité est suffisante, avec l'horizon et l'environnement réels vus par le pilote à travers le pare-brise de son véhicule. La position et la forme des symboles sont calculés et affichés par exemple par le calculateur de commande d'un collimateur tête-haute à partir de données fournies par des capteurs embarqués dans l'avion.

Sur l'écran de visualisation d'un dispositif connu d'assistance au pilotage d'avion, l'horizon artificiel calculé est symbolisé par une ligne qui s'incline en fonction de l'inclinaison latérale (angle de roulis) de l'avion. Il se superpose à l'horizon réel visible si la visibilité est suffisante. Il le remplace lorsque la visibilité est insuffisante. La projection à l'infini de l'axe longitudinal de l'avion est matérialisée par un symbole dit "symbole avion". Ce symbole est plus ou moins haut au dessus de la ligne d'horizon selon que l'avion est plus ou moins cabré (assiette longitudinale de l'avion plus ou moins élevée); l'assiette de l'avion peut être repérée par la position du symbole d'avion devant une échelle d'assiette perpendiculaire à la ligne d'horizon. La position latérale du symbole avion, représentant le cap suivi, est repérée par ailleurs par rapport à une échelle graduée référencée par rapport au nord et défilant le long de la ligne d'horizon. Pour le pilote, la position du symbole avion sur l'écran matérialise à tout moment l'axe longitudinal de l'avion.

Pour l'atterrissage, l'environnement terrestre reconstitué sur l'écran de visualisation peut être complété par une représentation de la piste d'atterrissage dont les caractéristiques sont répertoriées dans des documents de configuration des terrains d'atterrissage, accessibles par le calculateur. Cette représentation artificielle de piste se superpose à la piste réelle visible lorsque les conditions de visibilité sont satisfaisantes. Elle la remplace lorsque la visibilité est insuffisante.

Par ailleurs, la direction de déplacement réelle de l'avion est différente de celle de son axe longitudinal, notamment à cause du vent latéral et à cause du fait que les forces aérodynamiques qui assurent la sustentation de l'avion et ses accélérations transverses proviennent de l'inclinaison de l'aile par rapport à la direction du déplacement. C'est pourquoi la direction de déplacement réel de l'avion est représentée sur l'écran par un symbole particulier appelé généralement vecteur vitesse. Ce symbole de déplacement représente la direction du vecteur vitesse réelle de l'avion par rapport au sol; il est défini par deux composantes orthogonales qui sont d'une part la dérive de l'avion dans un plan horizontal et d'autre part la pente de montée ou descente de l'avion par rapport au plan horizontal.

La dérive est l'angle entre la route et le cap de l'avion, où la direction de la route est définie par la composante horizontale de la vitesse par rapport au sol de l'avion, tandis que le cap est défini par la direction de la projection horizontale de l'axe de l'avion. Et la pente de montée ou descente de l'avion par rapport au sol est définie par un angle dont la tangente est le rapport entre la composante verticale et la composante horizontale de la vitesse réelle de l'avion par rapport au sol.

Le symbole de vecteur vitesse, c'est-à-dire la direction de déplacement réel de l'avion, peut être représenté sur l'écran de visualisation dans un repère constitué d'une part de la ligne mobile d'horizon, graduée en unités angulaires de cap, et d'autre part d'un axe perpendiculaire à la ligne d'horizon artificiel, gradué en angles de montée ou descente. Le symbole de vecteur vitesse est placé sur l'écran à une position repérée par rapport à ces deux axes, en fonction de la dérive (reportée en abscisse le long de la ligne d'horizon) et la pente (reportée en ordonnée sur l'axe perpendiculaire à la ligne d'horizon). Dérive et pente sont calculées par les instruments de bord. Le pilote peut évaluer à tout moment la dérive et la pente en regardant la position du symbole par rapport à ces deux axes.

Avec un tel dispositif de pilotage, le pilote peut exécuter ses manoeuvres en pilotant directement le symbole de déplacement de l'avion sur l'écran de visualisation devant ses yeux, en particulier lorsque la visibilité est insuffisante.

Ce pilotage est encore aidé par l'affichage sur l'écran, à chaque instant, d'un symbole de guidage calculé par le calculateur en fonction d'une direction théorique à suivre. Le pilotage consiste alors à agir sur les commandes de l'avion dans un sens tendant à rapprocher sur l'écran le symbole de déplacement (ou vecteur vitesse) du symbole de guidage. Lorsque le symbole de guidage a la forme d'une fenêtre, le pilotage consiste à essayer de maintenir le symbole de déplacement dans la fenêtre représentant le symbole de guidage. Un guidage adéquat dépend donc principalement de la position du centre du symbole de guidage sur l'écran, et aussi de la forme et des dimensions de ce symbole.

On connaît déjà, par le brevet EP 0 044 777 un dispositif d'assistance qui permet d'afficher une fenêtre de guidage dans le cas de l'assistance à l'atterrissage sur une piste équipée d'un système ILS (Instrument Landing System).

Dans les systèmes ILS, permettant une approche de piste d'atterrissage par mauvaise visibilité, une droite de descente idéale est proposée au véhicule et les écarts entre cette droite et la position réelle du véhicule sont mesurés.

Ainsi, lorsque l'avion se déplace de telle façon que les écarts soient constamment nuls, la trajectoire réelle du véhicule coïncide avec la droite idéale.

Cette droite de descente idéale est une droite appartenant au plan vertical passant par l'axe de la piste d'atterrissage, et présentant une inclinaison $\theta_o$ par rapport au plan horizontal du sol. L'inclinaison $\theta_o$ est d'environ 2.5 à 3 degrés.

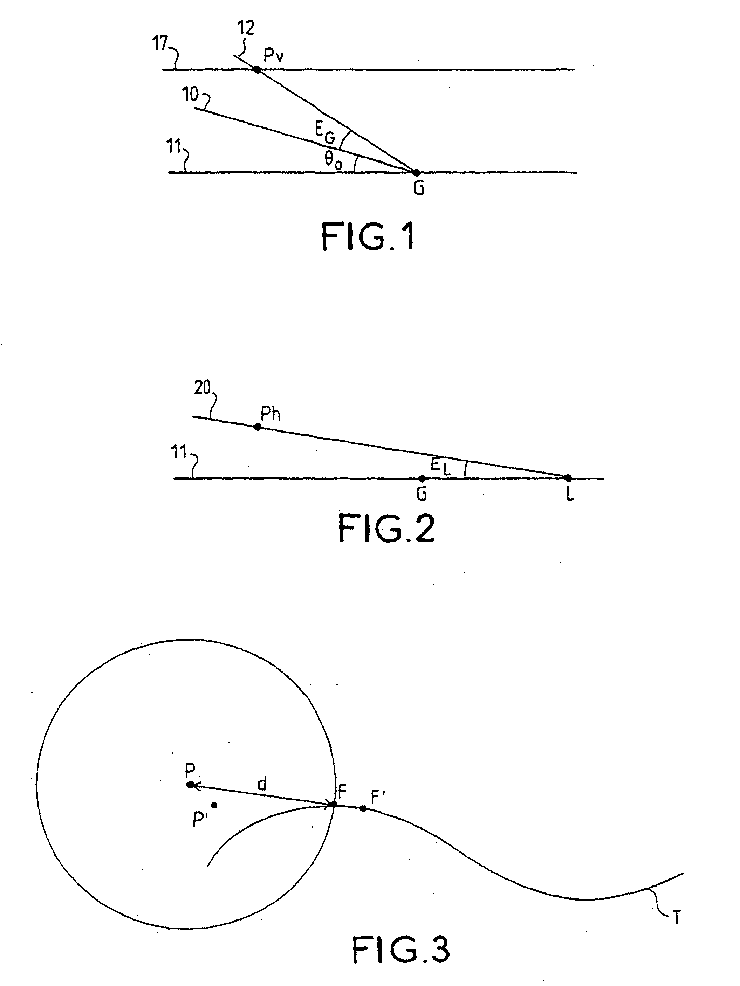

La figure 1 présente une vue du plan vertical passant par l'axe de la piste d'atterrissage. La droite de descente idéale 10 appartient au plan vertical passant par l'axe 11 de la piste d'atterrissage, elle y est définie par son inclinaison $\theta_o$ par rapport au plan horizontal du sol d'une part et par son intersection avec le sol au point d'impact idéal G pour l'atterrissage sur cette piste, d'autre part. Le point G est sur l'axe de la piste, proche du début de piste.

Dans ce plan vertical, une mesure de la position P de l'avion est effectuée par réception, sur une antenne à bord de l'avion, de signaux émis par un émetteur en G, cette mesure $E_{G'}$ ou "écart Glide", est la différence entre l'inclinaison de la droite idéale 10 et l'inclinaison de la droite 12 joignant la projection $P_v$ dans ce plan vertical de la position P de l'avion d'une part et le point d'impact idéal G d'autre part.

Le plan horizontal parallèle au sol et passant par la position P de l'avion est représenté par la droite 17 sur la figure 1, son contour à l'infini représente l'horizon sur 360 degrés vu de la position P.

La figure 2 présente une vue de dessus de la piste d'atterrissage, l'axe 11 de la piste étant la droite joignant le point G situé vers le début de la piste et un point L placé un peu au-delà de la fin de la piste. La projection $P_h$ de la position P de l'avion dans ce plan horizontal du sol d'une part et le point L d'autre part définissent une droite 20 écartée de l'angle $E_L$ de l'axe de la piste. L'angle $E_L$, ou "écart LOC", est mesuré par réception, sur une antenne à bord de l'avion, de signaux d'un émetteur radio placé au point L.

Le pilote voit donc le point G sous l'angle $(\theta_o + E_G)$ en dessous de la ligne d'horizon, et le point L sous l'angle $E_L$ par rapport au cap de piste.

Et si le récepteur ILS placé à bord de l'avion indique un écart d'angle vertical $E_G$ ou un écart d'angle horizontal $E_L$ non nul, l'avion n'est pas sur la droite de descente idéale.

Le dispositif d'assistance connu affiche comme symbole de guidage, une fenêtre dont la position est définie sur l'écran à partir de la mesure des angles d'écart Glide $E_G$ et écart LOC $E_L$. Plus précisément le centre de la fenêtre est, sur l'écran de visualisation, à une position qui diffère du point d'impact idéal G (dans le repère constitué de la ligne mobile d'horizon graduée en unités angulaires de cap et de l'axe des inclinaisons longitudinales), de quantités respectivement proportionnelles aux écarts $E_L$ et $E_G$ à l'aide de coefficients de proportionnalité $k_L$ et $k_G$. Le pilote doit chercher à rapprocher et à maintenir le symbole de déplacement réel de l'avion dans cette fenêtre.

De façon générale les consignes, correspondant aux positions successives du centre de la fenêtre de guidage, permettent au véhicule de s'approcher progressivement de la droite idéale et donc d'aligner sa propre trajectoire avec cette droite. Ce qui constitue un guidage sur une droite.

Les coefficients $k_G$ et $k_L$ régulent l'amortissement de la consigne : pour des valeurs faibles de ces coefficients, le guidage vers la droite idéale est lent et pour des valeurs plus fortes, l'avion est plus rapidement dirigé vers cette droite.

Cependant on constate que lorsque l'avion est à une position P ($P_h$, $P_v$) proche du point G, la prise en compte d'une telle consigne conduit le véhicule au-delà de la droite idéale, et en suivant les consignes successives d'un tel guidage, le véhicule se met à osciller de part et d'autre de la droite idéale tout en réduisant sa distance par rapport au point G. Avec un tel guidage, la visée jusqu'au point d'impact idéal G est instable.

Dans le brevet EP 0 044 777 pour avoir une visée plus stable le gain $K_G$ est variable en fonction de la distance au point G. De plus la loi de guidage est changée dans le plan vertical à l'approche du sol.

Un but de l'invention est de proposer un guidage ne présentant pas cet inconvénient et présentant d'autres avantages pour le pilote.

Pour y parvenir l'invention propose d'afficher à chaque instant une fenêtre de guidage centrée sur un point de l'espace qui est situé sur une trajectoire prédéterminée et qui est distant d'une valeur prédéterminée d de la position actuelle du véhicule.

L'invention propose plus précisément un dispositif d'assistance au pilotage, ou à la simulation du pilotage, d'un véhicule, ce dispositif comportant des moyens de détermination de la position actuelle du véhicule, un générateur de symboles d'aide au pilotage, des moyens d'affichage de ces symboles, parmi lesquels un symbole de vecteur vitesse dont la position sur les moyens d'affichage représente la direction de déplacement du véhicule par rapport au sol et un symbole de guidage dont la position sur les moyens d'affichage représente une direction de consigne dans laquelle le véhicule devrait se déplacer pour rejoindre une trajectoire prédéterminée et des moyens de calcul de cette direction de consigne à partir de la position actuelle et d'informations sur ladite trajectoire prédéterminée, caractérisé en ce que la direction de consigne calculée par lesdits moyens de calcul est la direction de la droite reliant la position actuelle du véhicule à un point de consigne situé sur une trajectoire de guidage correspondant à ladite trajectoire prédéterminée et distant de ladite position du véhicule d'une distance de consigne prédéterminée d.

Le système d'assistance calcule donc une direction de consigne en recherchant sur la trajectoire de guidage un point situé à une distance prédéterminée d en avant du véhicule.

La trajectoire prédéterminée est soit la trajectoire exacte que devrait suivre idéalement le véhicule soit une représentation simplifiée de cette trajectoire, et notamment une représentation sous forme de segments de droite successifs. La trajectoire de guidage est soit confondue avec la trajectoire prédéterminée (cas général) soit dérivée de la trajectoire prédéterminée pour tenir compte de circonstances particulières. Un exemple typique de cas où la trajectoire de guidage n'est pas la trajectoire prédéterminée que doit suivre le véhicule est la phase finale d'atterrissage de l'avion, après la phase de descente, où la trajectoire prédéterminée est l'axe de la piste puisque l'avion doit terminer l'atterrissage en roulant sur la piste, mais où la trajectoire de guidage n'est pas la piste elle-même mais est de préférence une parallèle à l'axe de la piste, située au dessous de la piste.

Les avantages principaux de l'invention sont les suivants.

Tout d'abord, il est plus facile de maintenir d'une manière stable le symbole de déplacement dans la fenêtre de guidage lorsque le véhicule est sur la trajectoire théorique qu'il doit suivre ou lorsqu'il est à proximité immédiate de cette trajectoire.

D'autre part il est maintenant possible de faire suivre à l'avion une trajectoire continue guidée par une trajectoire de guidage discontinue composée de segments. Par exemple, contrairement aux systèmes de l'art antérieur, un avion peut suivre une trajectoire prédéterminée qui comprend une droite de descente idéale, une courbe d'arrondi à l'approche du point d'impact, et une droite de roulage sur la piste, ceci en utilisant comme trajectoire de guidage une simple succession de deux segments de droite qui sont la droite de descente idéale et une droite parallèle à la piste. La courbe d'arrondi est alors suivie automatiquement par l'avion par le principe même de l'invention c'est à dire par le principe de la poursuite d'un point fictif qui est situé à une distance d en avant de l'avion et qui suit deux segments de droite successifs. Dans l'art antérieur, le guidage théorique devait être interrompu avant l'arrondi d'atterrissage.

L'invention permet également de suivre segment par segment une trajectoire de roulage sur les pistes depuis l'atterrissage jusqu'au point de stationnement, avec une trajectoire de guidage segmentée et des arrondis gérés automatiquement par le système.

Enfin, un avantage essentiel de l'invention réside dans la perception qu'a le pilote de la signification de la fenêtre de guidage qu'il voit sur son écran. Dans l'art antérieur, la position de la fenêtre représentait certes une direction de consigne à suivre par l'avion, mais cette direction ne correspondait à aucun point réel de l'espace vers lequel l'avion aurait des raisons de se diriger. La direction repérée par une fraction de l'écart Glide en altitude et par une fraction de l'écart LOC en latéral ne correspond en effet à aucun point physique de l'espace ayant une signification particulière pour le pilote. Et d'ailleurs, les écarts Glide et LOC dans le système ILS ne sont même pas mesurés par rapport à un même point de référence puisque l'écart LOC se réfère par rapport à un point L au bout de la piste tandis que l'écart Glide se réfère par rapport à un point G en début de piste.

Dans l'invention, la fenêtre, ou plus exactement son centre, indique au pilote la direction d'un point de l'espace qui est un point de consigne effectivement situé sur la trajectoire de guidage. Le pilote peut donc visualiser mentalement cette trajectoire, en imaginant que la fenêtre est située sur cette trajectoire. En particulier lors de la descente vers la piste, le pilote voit sur son écran la piste en perspective réaliste et il sait bien que la trajectoire idéale de descente est une droite dirigée vers le début de piste et dans l'axe de la piste. Il peut donc facilement imaginer le plan vertical de descente, et la fenêtre lui montre d'une manière tout-à-fait réaliste un point de cette trajectoire situé à la distance d en avant de l'avion.

Cette particularité de l'invention est très importante parce que le pilote qui navigue à l'aide des instruments doit avoir une conscience intuitive très réaliste de ce que lui indiquent ses instruments pour pouvoir en cas de besoin confronter immédiatement et intuitivement les indications des instruments et la réalité qu'il perçoit par ailleurs directement.

De façon générale l'invention permet le guidage d'un véhicule sur une trajectoire prédéterminée quelconque en connaissant cette trajectoire et la position du véhicule.

L'invention sera mieux comprise à l'aide des descriptions s'appuyant sur les figures suivantes:

La figure 1, déjà décrite, présente une vue du plan vertical passant par l'axe d'une piste d'atterrissage munie d'un système ILS ou équivalent.

La figure 2, également déjà décrite, présente une vue de dessus de la même piste d'atterrissage.

La figure 3 présente des points de consigne sur une trajectoire de guidage.

La figure 4 présente l'avion et un segment de trajectoire prédéterminée vus de dessus.

La figure 5 présente le plan vertical contenant un segment de trajectoire prédéterminée.

La figure 6 présente un segment de raccordement à une trajectoire prédéterminée, l'ensemble formant une trajectoire de guidage.

La figure 7 présente la trajectoire réelle d'un véhicule suivant la consigne selon l'invention sur une trajectoire de guidage en ligne brisée.

La figure 8 présente une visualisation d'assistance au pilotage.

La figure 9 présente une consigne de guidage à l'atterrissage de type ILS (plan vertical).

La figure 10 présente la même consigne de guidage (plan horizontal).

La figure 11 présente des écarts dans le plan vertical par rapport à la droite idéale de descente.

La figure 12 présente une fenêtre de guidage élaborée selon l'invention.

La figure 13 représente en perspective une consigne de guidage à l'atterrissage avec deux segments dont l'un est l'axe de la piste.

La figure 14 représente une consigne de guidage avec deux segments, le deuxième étant situé sous l'axe de la piste.

La figure 15 représente l'aspect général de l'écran de visualisation à l'approche de l'atterrissage.

La figure 16 représente la structure générale du dispositif d'assistance à la navigation utilisant un calculateur de collimateur tête-haute.

L'invention sera décrite en détail à propos du pilotage d'un avion. On suppose que l'avion dispose classiquement :

- des moyens nécessaires à la détermination de sa propre position à tout instant,
- des moyens de calcul de sa route et de sa pente, c'est-à-dire des deux composantes de son déplacement réel, qui lui permettent d'afficher un symbole de déplacement réel (ou vecteur vitesse) sur un écran de visualisation;
- et qu'il dispose aussi des données de trajectoire prédéterminée ou trajectoire de consigne qu'il doit suivre ou qu'il doit rejoindre.

Pour la facilité de l'explication, on supposera d'abord que la trajectoire de guidage qui va servir pour l'aide au pilotage est exactement la trajectoire prédéterminée que l'avion doit suivre ou rejoindre. Cette trajectoire prédéterminée est définie sous forme exacte avec des courbes d'arrondi entre segments de droite, ou de préférence sous forme simplifiée avec uniquement des segments de droite.

Le calculateur de bord de l'avion peut donc calculer à tout moment quel est le point F de la trajectoire de guidage qui est situé à une distance d en avant de la position P de l'avion.

Un symbole de guidage sera affiché sur l'écran à une position dont les coordonnées sur l'écran représentent les deux composantes (verticale et horizontale) de la direction reliant le point P au point F. La figure 3 illustre ce principe de distance d entre l'avion et un point de la trajectoire de consigne.

Sur la figure 3, la trajectoire de guidage T et la position P du véhicule sont connues dans un même repère, par exemple un repère fixe par rapport à la terre. Pour le véhicule à la position P, la consigne de guidage selon l'invention est la direction de la droite reliant P à un point de consigne F tel que F appartienne à la trajectoire de guidage T, tel que la distance PF ait la valeur de consigne prédéterminée d, et tel que le point F soit en avant de l'avion.

Ainsi F est le point d'intersection de la trajectoire de guidage T et de la sphère S de centre P et de rayon d. Seul le point d'intersection situé en avant de la trajectoire sera retenu bien entendu.

Le pilote, en modifiant sa direction de déplacement pour s'approcher de la direction de consigne, va déplacer son véhicule et lorsqu'il sera par exemple à la position P' représentée sur la figure 3, la nouvelle consigne selon l'invention, sera la droite P'F', où F' est sur la trajectoire T et la distance P'F' a la valeur d.

En considérant, par exemple, la trajectoire de guidage T formée du segment de trajectoire prédéterminée $S_i$, les consignes successives fournies par l'invention permettent au véhicule de rejoindre la trajectoire prédéterminée $S_i$.

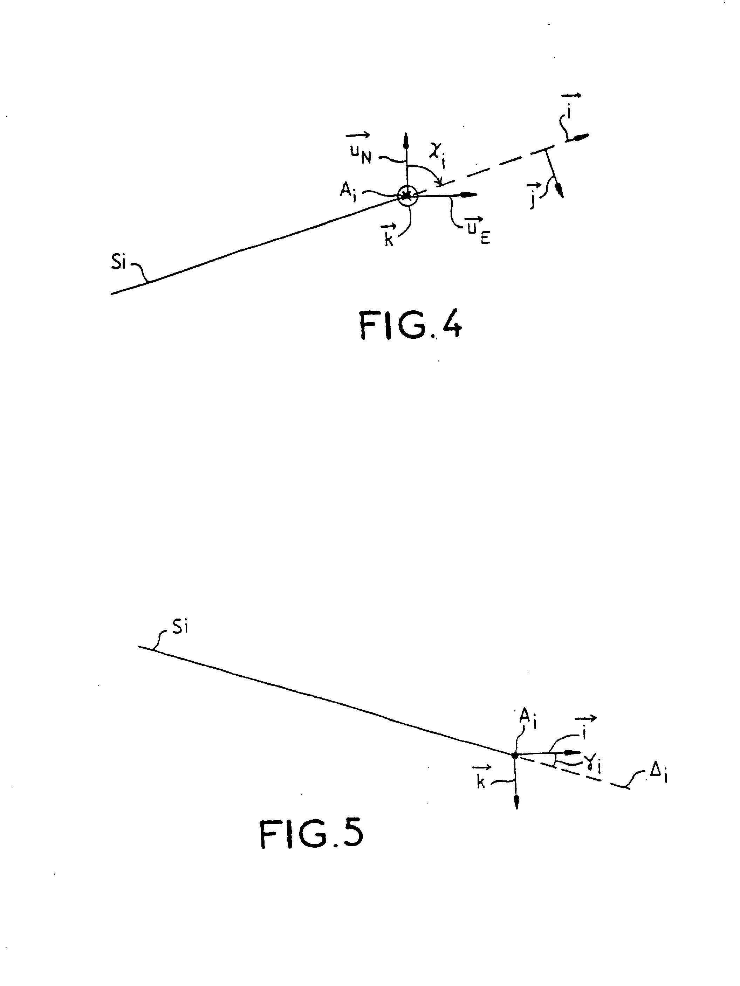

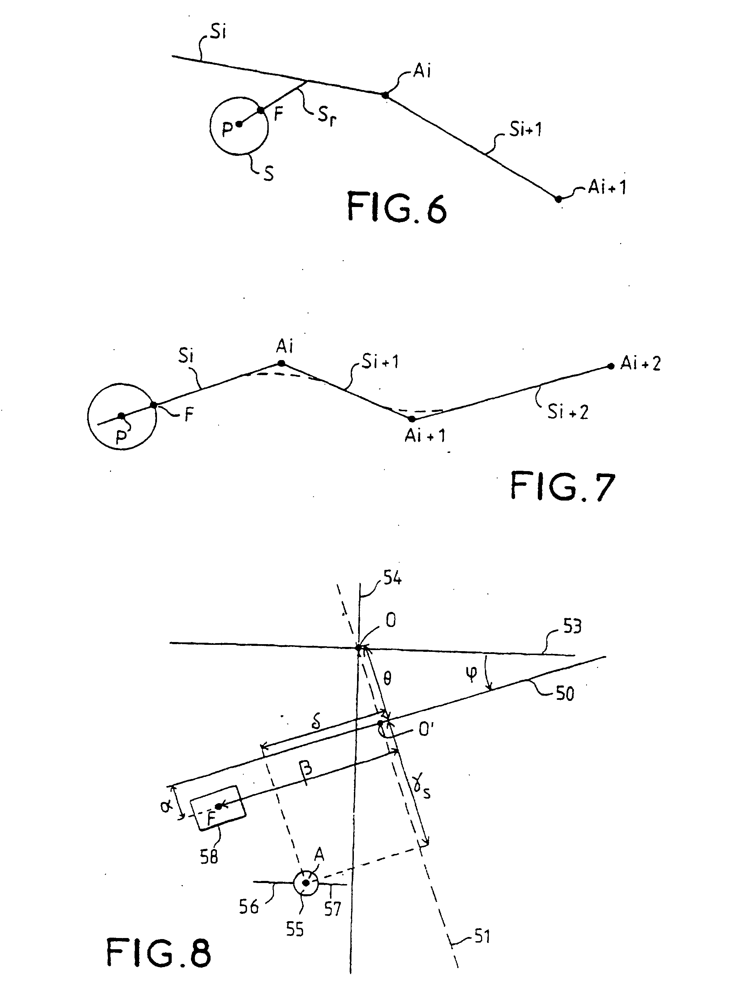

A titre d'exemple illustré par les figures 4 et 5, le calcul du point de consigne F est développé pour une position P de l'avion de coordonnées connues en latitude, longitude et altitude et pour une trajectoire prédéterminée formée d'un segment orienté $S_i$ défini par rapport à la terre par la route magnétique $\chi_i$, sa pente $\gamma_i$ et les coordonnées de son point d'aboutissement $A_i$ en latitude, longitude et altitude.

La route magnétique est l'angle $\chi_i$, représenté sur la figure 4, entre le nord magnétique et le segment orienté $S_i$ et la pente est l'angle $\gamma_i$ entre l'horizontale et la verticale dans le plan vertical contenant le segment $S_i$, et représenté sur la figure 5.

En considérant la terre localement plate, un repère terrestre simple $R_N$ ayant comme origine ledit point d'aboutissement $A_i$ est celui correspondant aux trois directions orthogonales définies par le Nord magnétique $\overrightarrow{U_N}$, l'Est $\overrightarrow{U_E}$ et la verticale dirigée vers le sol $\bar{k}$. Ledit repère

$$R_N \left( A_i, \overrightarrow{u_N}, \overrightarrow{u_E}, \bar{k} \right)$$

est représenté sur la figure 4.

Bien entendu, l'utilisation du Nord magnétique n'est pas obligatoire, et le Nord géographique pourrait aussi bien être utilisé.

Le dispositif peut considérer le repère $R_i$ obtenu par rotation, du repère $R_N$ ci-dessus, de l'angle $\chi_i$ autour de l'axe $\bar{k}$. En considérant les directions $\bar{i}$ et $\bar{j}$ dans le plan horizontal telles que

$$\bar{i} = \cos \chi_i \ \overrightarrow{U_N} + \sin \chi_i \ \overrightarrow{U_E}$$

et

$$\bar{j} = \sin \chi_i \ \overrightarrow{U_N} + \cos \chi_i \ \overrightarrow{U_E},$$

le repère $R_i$, d'origine le point $A_i$ et de directions $\bar{i}$ et $\bar{j}$ complétées par la direction verticale $\bar{k}$, permet un calcul simple des coordonnées du point de consigne F pour le guidage.

En effet, le dispositif, connaissant la position P par rapport à la terre du véhicule, peut calculer l'abscisse $x_p$, l'ordonnée $y_p$ et la cote $z_p$ de cette position P dans le repère $R_i$, soit $P(x_p, y_p, z_p)$.

Par ailleurs, la trajectoire de guidage correspondant à la trajectoire prédéterminée formée du segment $S_i$ est la droite $\Delta_i$ support du segment $S_i$. Et dans ce même repère $R_i$, la droite $\Delta_i$ support du segment $S_i$ vérifie l'équation simple

$$\Delta_i \begin{cases} y = 0 \\ x \sin \gamma_i - z \cos \gamma_i = 0 \end{cases}$$

tandis que la sphère SP de centre P et de rayon d vérifie l'équation

$$SP \qquad (x-x_p)^2 + (y - y_p)^2 + (z-z_p)^2 = d^2 \qquad \qquad (E1)$$

Le point F permettant de définir la consigne selon la direction PF se trouve à l'intersection de la sphère SP et de la droite de guidage $\Delta_i$, ses coordonnées $F(x, y, z)$ dans le repère $R_i$ vérifient à la fois le système d'équations de la droite $\Delta_i$ et l'équation de la sphère SP.

Soit

$$\begin{cases} y = 0 \\ x \sin \gamma_i - z \cos \gamma_i = 0 \\ (x - x_p)^2 + (y - y_p)^2 + (z - z_p)^2 = d^2 \end{cases} \qquad (E2)$$

ce qui peut s'exprimer sous la forme suivante:

$$\begin{cases} y = 0 \\ z = x \, tg \ \gamma_i \\ x^2(1 + tg^2 \ \gamma_i) \ - 2x(x_p + z_p \, tg \ \gamma_i) \ + (x_p^2 + y_p^2 + z_p^2) \ - d^2 = 0 \end{cases} \quad (E3)$$

La valeur de l'abscisse x du point de consigne F est issue des solutions de l'équation E3.

Si deux solutions existent, le dispositif prend par exemple la valeur la plus grande.

De plus si la valeur retenue est positive, le segment $S_i$ est dépassé, et il convient alors de rechercher l'intersection avec le segment suivant $S_{i+1}$ de trajectoire prédéterminée commençant au point $A_i$ d'aboutissement du segment $S_i$ et finissant au point $A_{i+1}$ d'aboutissement du segment suivant $S_{i+1}$.

S'il n'y a pas de solution, comme sur la figure 6 où les segments consécutifs $S_i$ et $S_{i+1}$ ne présentent pas d'intersection avec la sphère S de centre P et de rayon d, le véhicule pourra suivre un segment $S_r$ de raccordement intermédiaire pour rejoindre le segment $S_i$. Un tel segment intermédiaire est représenté sur la figure 6, il peut être proposé par défaut comme guidage par le dispositif mais il peut être défini par le pilote lui-même.

Le véhicule en P se dirige alors vers le segment prédéterminé $S_i$ en suivant le guidage selon le segment de raccordement $S_r$, puis lorsque le véhicule est suffisamment proche du segment $S_i$, la consigne s'appuie directement sur le segment $S_i$.

Ainsi le dispositif détermine le point F solution de (E3) dans le repère Ri et, possédant les coordonnées de P dans le même repère, il peut y calculer les coordonnées de $\overrightarrow{PF}$ pour finalement les exprimer dans le repère $R_N$ en appliquant la transformation correspond à la rotation - $\chi_i$ liant ces deux repères.

La connaissance de la position P du véhicule et du segment de trajectoire prédéterminée $S_i$ permet au dispositif selon l'invention de calculer la position du point F sur lequel s'appuie la direction de consigne et la connaissance d'un segment $S_{i+1}$ consécutif à $S_i$ permet de prolonger la consigne relative au segment $S_i$ par celle relative au segment $S_{i+1}$, le point_ F de consigne glissant sur le segment $S_i$ puis sur le segment suivant $S_{i+1}$.

Ce guidage sur une droite, conduit un véhicule respectant la consigne à tangenter la droite de consigne, et l'enchaînement de segments de guidage conduit le véhicule sur une trajectoire réelle joignant les segments par des arrondis tangents représentés en pointillés sur la figure 7.

L'arrondi est géré directement par ce principe de guidage par un point situé à une distance d et suivant des segments brisés. C'est ce qui permet d'utiliser comme trajectoire prédéterminée à suivre par l'avion une représentation simplifiée de cette trajectoire, sous forme de segments successifs, mais on comprendra que l'invention est applicable également si la trajectoire prédéterminée fournie au calculateur est déjà une trajectoire exacte avec des arrondis prédéterminés.

Le réglage de la consigne en distance d permet de gérer des arrondis plus ou moins serrés. Par exemple, on peut fixer une distance d1 prédéterminée pour les trajectoires de navigation en altitude, une distance d2 plus faible que d1 pour gérer l'approche et le suivi de la trajectoire de descente, et enfin une distance d3 encore plus faible pour gérer l'atterrissage proprement dit, en particulier pour gérer l'arrondi final avant le point d'impact au sol.

La réalisation préférée du dispositif selon l'invention comprend un dispositif de visualisation, fixé rigidement au véhicule et dont l'image projetée devant les yeux du pilote est représentée sous forme simplifiée sur la figure 8.

Sur cette image, un plan de référence horizontal du véhicule passant par son centre de gravité est représenté par un axe horizontal 53, un plan de référence vertical du véhicule passant par son centre de gravité est représenté par un axe vertical 54, et ces deux axes 53 et 54 présentent une intersection au point O. Les plans de référence sont ceux qui correspondent à un angle de tangage nul et un angle de roulis nul pour l'avion. Un symbole d'avion peut être représenté au point O.

La ligne mobile d'horizon 50 est définie par rapport aux axes fixes de l'avion 53 et 54 par sa position relative au point O et par son inclinaison latérale φ avec l'axe horizontal 53; l'inclinaison de la ligne d'horizon correspond à l'inclinaison latérale (roulis) de t'avion, c'est-à-dire que du fait du roulis, le pilote qui est solidaire de l'inclinaison de l'avion voit la ligne d'horizon artificiel 50 s'incliner (exactement comme l'horizon réel auquel il se superpose). La distance OO' de la ligne d'horizon 50 par rapport au point O est proportionnelle à l'inclinaison longitudinale θ de l'avion (assiette longitudinale de l'avion). Le point O représente en fait la projection à l'infini de l'axe longitudinal de l'avion au dessus de la ligne d'horizon. Les inclinaisons latérale φ et longitudinale θ sont fournies de préférence par une centrale à inertie montée sur le véhicule. La ligne d'horizon 50 peut être représentée sur l'image par un trait continu, elle est graduée en unités angulaires de cap et la valeur du cap du véhicule étant fournie de préférence par ladite centrale à inertie, la graduation peut être matérialisée sur l'image par des traits perpendiculaires à cette ligne et distants par exemple de un degré. La graduation est une graduation défilante sur 360°.

La droite passant par le point O et orthogonale à la ligne mobile d'horizon 50 est la ligne d'inclinaison longitudinale 51; elle coupe la ligne mobile d'horizon 50 au point O' représentant le cap du véhicule, elle est graduée en unités angulaires de sorte que la distance OO' est une mesure de l'assiette longitudinale θ. Un symbole de cap est affiché au point O', projection du point O sur la ligne d'horizon 50.

Le symbole de vecteur vitesse visualise la direction de déplacement réel du véhicule par rapport au sol et est centré sur un point A. Son abscisse sur la ligne mobile d'horizon 50 représente la route du véhicule, distante du point O' de la valeur de la dérive δ qui est l'angle entre la route et le cap du véhicule; la route est définie par la composante horizontale de la vitesse par rapport au sol du véhicule. L'ordonnée du point A sur la ligne d'inclinaison longitudinale 51 représente la pente $\gamma_S$ du véhicule par rapport au sol, c'est-à-dire un angle de descente par rapport au sol; la tangente de la pente est égale au rapport de la composante verticale à la composante horizontale de la vitesse par rapport au sol du véhicule.

Le symbole du vecteur vitesse est par exemple un cercle 55 de centre A complété par deux tirets 56 et 57 situés de part et d'autre du centre A du symbole sur une droite passant par le centre de ce symbole et parallèle à l'axe horizontal du véhicule 53.

Sur l'image, le symbole de guidage est centré sur la représentation du point de consigne F de l'espace réel. D'après la description ci-dessus, les coordonnées du vecteur $\overrightarrow{PF}$ sont connues dans le repère terrestre $R_N$, elles permettent donc le positionnement, sur l'image dans le véhicule à la position P, de la représentation du point de consigne F. Les coordonnées du centre du symbole de guidage sont repérées comme celles du symbole de déplacement, par rapport aux axes 50 (ligne d'horizon) et 51 (perpendiculaire à la ligne d'horizon par le point O). Ainsi, de même que la position sur l'écran du symbole de déplacement réel représente une direction de déplacement réel de l'avion exprimé en route et en pente, la position du symbole de guidage dans le même repère représente une direction de consigne à suivre par l'avion en route et en pente par rapport à l'axe de l'avion. Et cette direction est, selon l'invention, celle du vecteur $\overrightarrow{PF}$, dans lequel P est la position de l'avion et F est à distance d de l'avion sur la trajectoire de guidage. Les coordonnées de ce vecteur $\overrightarrow{PF}$ sont portées sur l'écran en composantes de route (selon l'axe 50) et de pente (selon l'axe 51).

Le but du pilotage assisté est alors de manoeuvrer l'avion dans un sens tendant à ce que le symbole de déplacement rejoigne le symbole de guidage et reste centré sur ce dernier. Concrètement, si le symbole de guidage est à gauche du symbole de déplacement (cas de la figure 8) selon l'axe 50, le pilote doit faire virer l'avion vers la gauche. Si le symbole de guidage est au dessus du symbole de déplacement selon l'axe 51, le pilote doit réduire la pente de descente.

Le symbole de guidage est par exemple une fenêtre rectangulaire 58, centrée sur le point F, et dont les dimensions reflètent les écarts acceptables par rapport à la consigne exacte F. Ces écarts ne sont pas forcément les mêmes en dérive et en pente. Et ils ne sont pas forcément les mêmes durant toutes les phases de vol, d'atterrissage et de roulage.

On va maintenant décrire l'application de l'invention dans le cas où les données de trajectoire idéale sont fournies par un système ILS pour définir d'une part la droite de descente idéale vers un point d'impact théorique G, et d'autre part l'axe de la piste d'atterrissage sur laquelle l'avion va rouler après l'impact. La trajectoire prédéterminée à suivre est représentée par un segment de droite de descente idéale suivi d'un segment de droite horizontale dans l'axe de la piste. L'arrondi sera géré automatiquement.

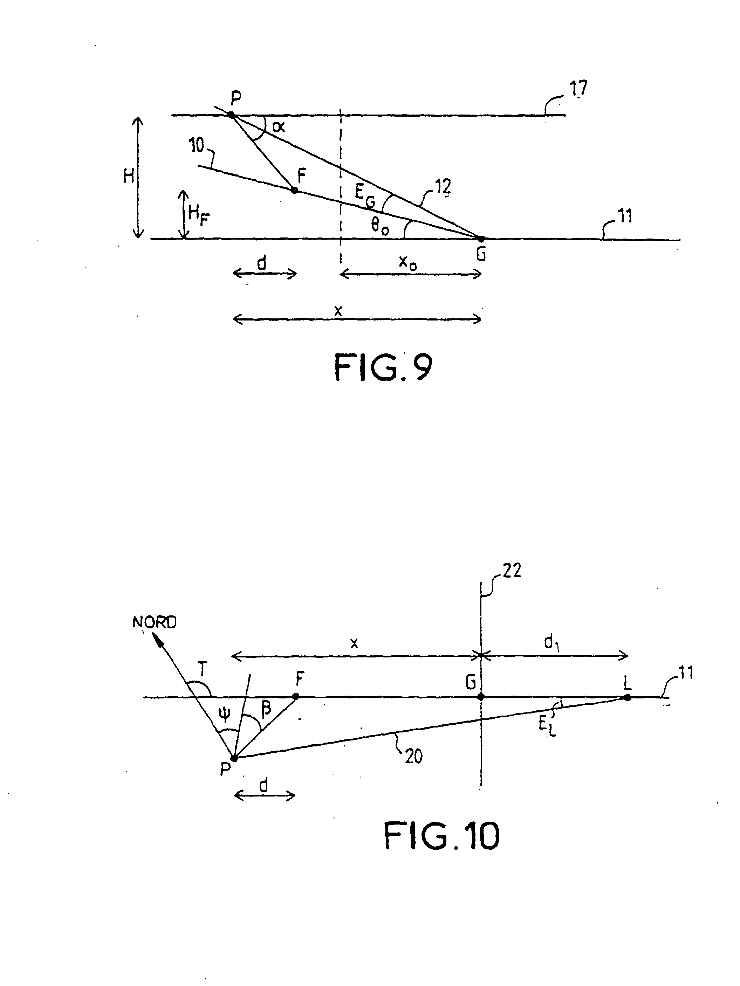

Dans le plan vertical représenté sur la figure 9, passant par l'axe de la piste d'atterrissage 11, la droite de descente idéale 10, correspondant à l'axe de guidage du faisceau ILS, présente une inclinaison $\theta_o$. par rapport à l'axe 11 de la piste d'atterrissage, et une intersection avec l'axe 11 de la piste au point G.

Une information de position de l'avion est fournie par la mesure, sur le récepteur ILS à bord de l'avion, de l'angle EG entre les deux plans passant par l'axe horizontal comprenant le point G et orthogonal à l'axe de la piste d'atterrissage 11 et tels que l'un des deux plans contient la droite idéale de descente 10 et l'autre plan contient le point P représentant la position de l'avion.

L'altitude H de l'avion est fournie par exemple par un radioaltimètre monté sur l'avion. Lorsque l'avion est proche de la droite de descente idéale 10, elle-même de faible inclinaison $\theta_o$ par rapport au plan horizontal, la distance horizontale x entre l'avion et le point P et le point G est simplement égale au rapport de l'altitude H de l'avion sur l'inclinaison $\theta_o$ de la droite de descente idéale augmentée de la mesure $E_G$.

$$x = \frac{H}{\theta_o + E_G} \tag{E4}$$

Dans la réalisation préférée du dispositif selon l'invention, une information de localisation de la position P du véhicule est fournie par un système ILS, mais un système de localisation par satellites comme le GPS pourrait aussi fournir une telle information.

Une fois l'avion relativement près de l'axe de guidage matérialisé par le faisceau ILS, les caractéristiques géométriques de la position de l'avion P, du point F de consigne selon l'invention, et du système ILS permettent une expression simplifiée de la position du symbole de guidage sur les moyens d'affichage du dispositif d'assistance au pilotage.

Selon l'invention, le point de consigne F appartient à la droite de descente idéale 10 et est distant de la position P de l'avion de la distance de consigne prédéterminée d.

Sous l'hypothèse ci-dessus de proximité de l'avion avec l'axe de guidage, l'altitude $H_F$ du point de consigne F est représentée par le produit de l'inclinaison $\theta_o$ de la droite de descente idéale 10 par la différence entre ladite distance horizontale x et la distance de consigne prédéterminée d.

$$H_F = \theta_o(x - d) \tag{E5}$$

Dans le plan vertical de la figure 9, le point de consigne F est vu par l'avion sous l'inclinaison $\alpha$ dont la valeur est fournie au générateur de symboles d'aide au pilotage pour définir, pour l'image de la figure 8 projetée devant les yeux du pilote, l'ordonnée du centre du symbole de guidage le long de la ligne d'inclinaison longitudinale 51 référencée au point O'.

L'inclinaison $\alpha$ est le rapport de la différence d'altitude entre la position de l'avion P et le point de consigne F sur la distance de consigne d.

$$\alpha = \frac{H - H_F}{d} \tag{E6}$$

Selon l'invention, l'ordonnée $\alpha$ du centre du symbole de guidage est une fonction des paramètres suivants fournis au dispositif d'assistance au pilotage :

- l'inclinaison $\theta_o$ de la droite de descente idéale issue des informations sur les terrains d'atterrissage,
- l'altitude H de l'avion mesurée par le radioaltimètre de bord,
- la mesure $E_G$ du récepteur ILS de bord
- la distance prédéterminée de consigne d

$$\alpha = \theta_o + \frac{H}{d} - \frac{\theta_o}{d}\left(\frac{H}{\theta_o + E_G}\right) \tag{E7}$$

La distance prédéterminée de consigne d peut-être fournie par le pilote, par exemple, par saisie numérique ou par la sélection d'une valeur dans une liste à l'aide d'un dispositif adéquat.

Elle peut aussi être déterminée automatiquement par le dispositif d'assistance selon l'invention à partir par exemple d'informations sur le terrain d'atterrissage et sur la conception de l'avion.

La mesure de l'angle $E_G$ n'est plus possible par le récepteur à bord de l'avion lorsque celui-ci est très proche de la piste d'atterrissage, c'est-à-dire à une distance horizontale du point G inférieure à la distance minimale $x_o$ nécessaire à la validité de la mesure de l'ange $E_G$.

A partir du passage de l'avion à la distance minimale $x_o$, ladite distance horizontale x n'est plus estimée par la relation E4 mais à l'aide d'une estimation de la distance parcourue par l'avion en fonction de sa vitesse V par rapport au sol fournie par la centrale à inertie montée à bord et du temps écoulé depuis le passage à la position correspondant à la distance minimale $x_o$.

$$x = x_o - \int Vdt \tag{E8}$$

Ainsi, en l'absence de mesure de l'angle $E_G$, l'ordonnée du centre du symbole de guidage est déterminée par le générateur de symboles par la relation suivante

$$\alpha = \theta_o + \frac{H}{d} - \frac{\theta_o}{d}\left(x_o - \int Vdt\right) \tag{E9}$$

La figure 10 représente une vue de dessus de la piste d'atterrissage; l'axe de la piste 11 passe par les points G et L.

Une information de position de l'avion est fournie par la mesure, sur le récepteur ILS à bord de l'avion, de l'angle $E_L$ entre l'axe de la piste d'atterrissage 11 et la droite 20 à l'intersection du plan horizontal de la piste et du plan vertical passant par le point L de la piste et le point P de position de l'avion.

L'axe de la piste orienté de l'entrée vers la sortie de piste donc du point G vers le point L, présente un cap de valeur T fourni par les informations sur les terrains d'atterrissage avec la valeur d1 de la distance entre les points G et L.

Le cap de l'avion Ψ est fournit par la centrale à inertie montée à bord.

L'angle β est défini comme l'angle entre l'axe longitudinal de l'avion représenté par son cap Ψ et la droite à l'intersection du plan-horizontal de la piste et du plan vertical passant par le point G de la piste et le point P de position de l'avion.

Selon l'invention, la valeur de l'angle β est fournie au générateur de symboles d'aide au pilotage pour définir, pour l'image de la figure 8 projetée devant les yeux du pilote, l'abscisse du centre du symbole de guidage le long de la ligne mobile d'horizon 50 référencée au point O'.

Lorsque l'avion est proche de l'axe de guidage ILS, l'angle β s'exprime à l'aide de la distance horizontale x et des paramètres suivants :

- le cap de la piste T et la longueur de la piste d1 issus des informations sur les terrains d'atterrissage,
- le cap de l'avion Ψ fourni par la centrale à inertie montée sur l'avion,
- la mesure $E_L$ du récepteur ILS de bord,
- la distance prédéterminée de consigne d selon la relation suivante :

$$\beta = T - \psi - (x + d1)\,\frac{E_L}{d} \qquad (E10)$$

où le calcul de la valeur de la distance horizontale x a été décrit ci-dessus et résumé par les relations E4 et E8.

En présence de turbulences, le centre du symbole de guidage selon l'invention présente l'avantage de rester stable par rapport à l'environnement terrestre vu par le pilote. Ce qui facilite le respect de la consigne de guidage par le pilote.

Sur l'image projetée devant les yeux du pilote, le symbole de guidage est placé sur la représentation du point F, il a de préférence la forme, représentée sur la figure 8, d'une fenêtre rectangulaire 58 avec deux côtés parallèles à la ligne mobile d'horizon 50 et deux côtés parallèles à la ligne d'inclinaison longitudinale 51.

Pour suivre la consigne de guidage selon l'invention, le pilote place et maintient le symbole du vecteur vitesse de son véhicule à l'intérieur du contour de la fenêtre de guidage 58, dont les dimensions reflètent les écarts acceptables entre la direction du véhicule et la direction de consigne exacte représentée par le point F.

Dans le plan vertical, l'avion est considéré en écart excessif par rapport à la droite de descente idéale lorsqu'il sort du faisceau déterminée par deux plans de descente.

Ce plan de descente idéal est le plan passant par la droite de descente idéale d'inclinaison $\theta_o$ et par l'axe horizontal, représenté par la droite 22 sur la figure 10, comprenant le point G et orthogonal à l'axe de la piste d'atterrissage.

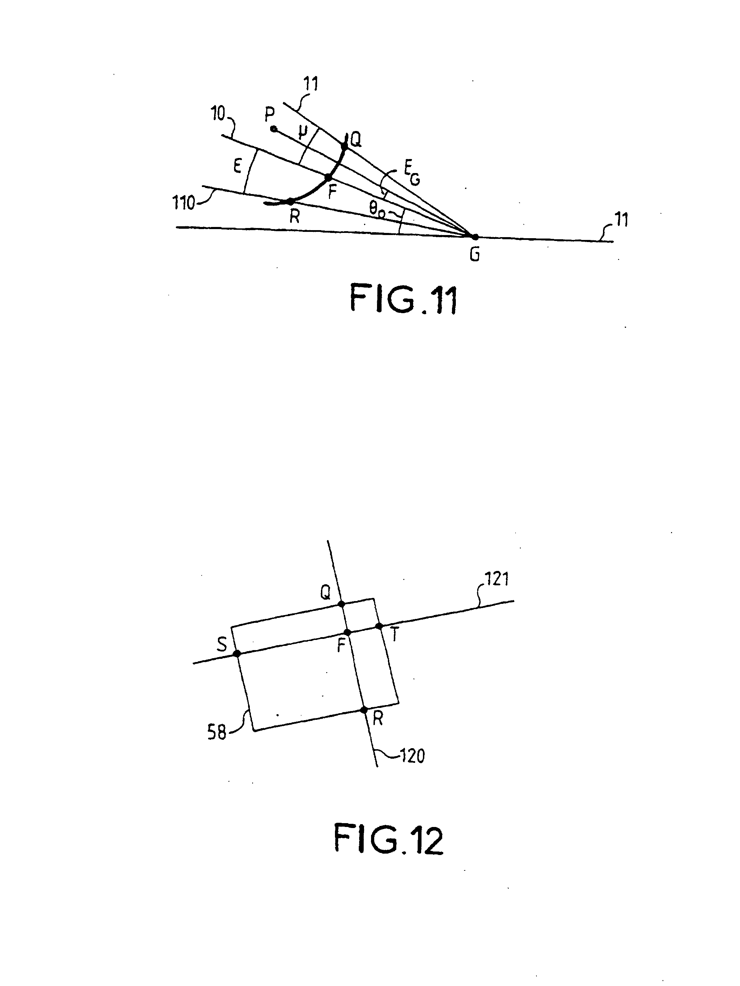

Un faisceau, représenté sur la figure 11, autour du plan de descente idéal est défini par son plan inférieur 110 et son plan supérieur 111 obtenus par rotation du plan idéal autour de l'axe horizontal 22 des angles respectivement ε et μ.

Ces valeurs angulaires e et μ peuvent être proportionnelles à celle de l'inclinaison $\theta_o$ de descente avec des coefficients de proportionnalité $k_\varepsilon$ et $k_\mu$, par exemple égaux à 0,12.

La fenêtre de consigne 58 est plus précisément représentée sur la figure 12. La droite 120 passant par son point F de centrage sur la consigne et parallèle à la ligne d'inclinaison longitudinale 51 présente deux intersections aux points Q et R avec les côtés de la fenêtre.

La droite 121 passant par son point F de centrage sur la consigne et parallèle à la ligne d'horizon mobile 50 présente deux intersections aux points S et T avec les côtés de la fenêtre.

Sur l'image projetée devant les yeux du pilote, les abscisses des points Q et R sont égales à celle du centre du symbole de guidage sur la droit de descente idéale d'inclinaison $\theta_o$.

L'ordonnée $\alpha_Q$ du point Q peut être égale à celle du centre d'un symbole de guidage selon l'invention correspondant à une descente sur le plan supérieur 111 défini par les angles $\theta_o$ et μ.

Et l'ordonnée $\alpha_R$ du point R peut-être égale à celle du centre d'un symbole de guidage correspondant à une descente sur le plan inférieur 100 défini par les angles $\theta_o$ et s.

Dans ce cas, $\alpha_Q$ et $\alpha_R$ sont estimées par les relations suivantes

$$\alpha_Q = \alpha + \mu - \frac{\mu}{d}\left(\frac{H}{\theta_O + E_G}\right) \qquad (E11)$$

$$\alpha_R = \alpha - \varepsilon + \frac{\varepsilon}{d}\left(\frac{H}{\theta_O + E_G}\right) \qquad (E12)$$

Cependant, les valeurs choisies pour la représentation de la fenêtre respectent aussi des contraintes de présentation, la fenêtre devant être visible sans être trop grande sur l'image pour permettre au pilote de suivre le guidage.

Dans le plan horizontal, l'avion doit poser ses roues sur la piste, ainsi la limite du guidage en bordure de fenêtre au point S peut correspondre à l'atterrissage sur un bord de la piste, et celle du point T correspond à l'autre bord. Une telle largeur peut être utilisée pendant tout le guidage. Mais une évolution progressive de la largeur peut aussi être utilisée.

D'autre part, la présentation de la fenêtre peut varier selon les phases de l'atterrissage, en particulier une modification de présentation peut être avantageuse pour rappeler le changement de phase au pilote comme par exemple le début d'arrondi d'atterrissage où le pilote devra modifier son altitude et ralentir.

On va décrire maintenant un perfectionnement de l'invention pour améliorer l'atterrissage proprement dit, et on verra comment dans ce cas il peut être souhaitable que le calculateur élabore une trajectoire de guidage différente de la trajectoire prédéterminée réelle que l'avion doit rejoindre et différente de la représentation simplifiée en segments de cette trajectoire réelle.

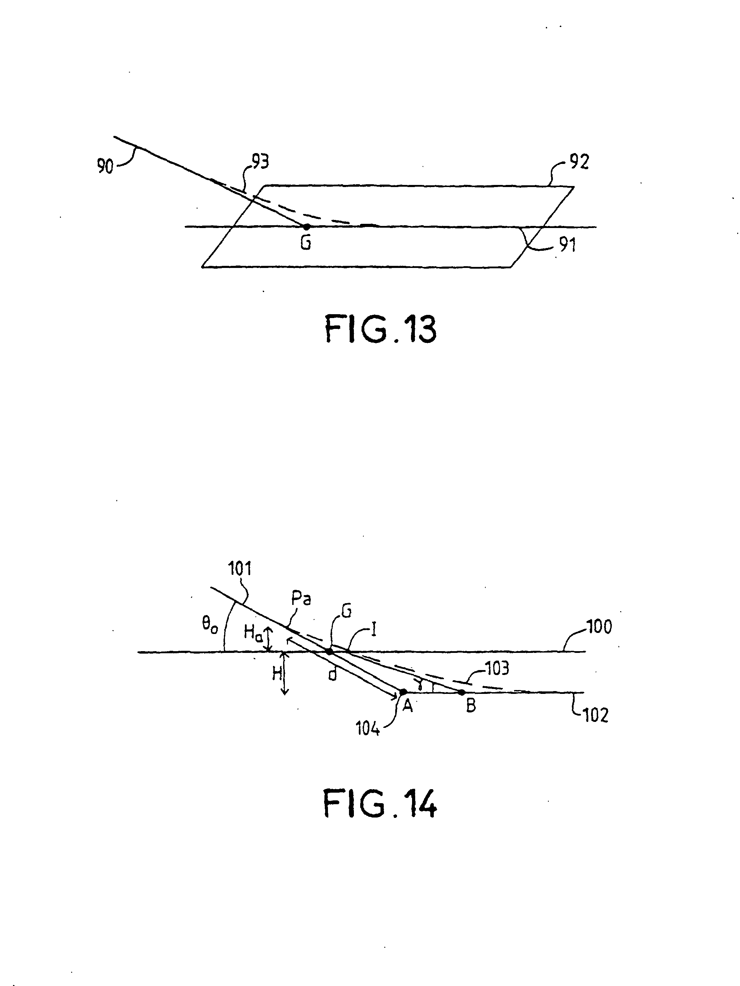

L'atterrissage peut être envisagé comme le suivi de la trajectoire de consigne particulière, représentée sur la figure 13, comprenant un segment de descente 90 et un segment de roulage 91 sur l'axe de la piste 92.

Le guidage selon l'invention sur une telle trajectoire conduit à un atterrissage doux en tangente sur la piste, représenté par la courbe 93 en pointillés, dont la précision serait insuffisante pour un atterrissage sans l'aide complémentaire du vol à vue. La précision du point d'impact réel n'est en effet suffisante que si la trajectoire réelle de l'avion intersecte la piste avec un angle non nul. En pratique, on considère que par mauvaise visibilité un angle de trajectoire d'environ un degré est souhaitable au moment de l'impact.

C'est pourquoi on propose, dans un perfectionnement de l'invention, que la trajectoire de guidage soit composée d'un segment de descente suivi d'un segment parallèle à l'axe de la piste et situé sous la piste. Ce perfectionnement améliore la précision d'atterrissage.

La figure 14 représente une vue du plan vertical au droit de l'axe 100 de la piste. Le guidage selon ce perfectionnement de l'invention sur les segments consécutifs, segment de descente 101 et segment sous la piste 102, avec gestion automatique de l'arrondi, conduit à une trajectoire réelle, représentée sur cette figure par la courbe 103 en pointillés, dont le point d'impact réel I avec le sol est plus précis que celui obtenu avec un segment de guidage coïncidant avec l'axe de la piste.

Lorsque le véhicule est déjà sur la droite de descente 101, le début d'arrondi automatique dû à un tel guidage s'effectue à la distance d du point 104 de changement de segment de guidage et l'examen de la géométrie représentée sur la figure 14 permet d'établir les deux paramètres de profondeur $\Delta H$ du segment de guidage 102 sous la piste et de distance de consigne prédéterminée d d'un tel guidage.

Ce début d'arrondi s'effectue à la position $P_a$ du véhicule guidé dont l'altitude vaut la valeur Ha et la consigne de guidage correspondant à cette position $P_a$ est le point A tel que la distance entre A et $P_a$ est égale à d.

Le point $P_a$ et le point A étant sur la droite de descente 101 de pente $\theta_o$, leur écart d'altitude est lié à leur distance par la relation E24 suivante

$$Ha + \Delta H = \theta_o \, d \qquad (E24)$$

Après le début d'arrondi, la consigne de guidage suit le segment horizontal 102 sous l'axe de piste et lorsque le véhicule est au point d'impact réel I, sa consigne de guidage est le point B de ce segment 102 tel que la distance IB soit égale à d, et l'angle de touche, défini comme l'angle $\gamma$ entre la trajectoire réelle et le sol, est l'angle entre le segment IB et le segment 102 sous l'axe de la piste.

Ainsi, la profondeur $\Delta H$ de ce segment et la distance de consigne d sont liées à l'angle de touche $\gamma$ par la relation E25 suivante :

$$\Delta H = \gamma d \qquad (E25)$$

Si l'angle de touche $\gamma$ est distinct de la pente de descente $\theta_o$, le couple de relations E24 et E25 est équivalent au couple de relations E26 et E27 suivant:

$$d = \frac{Ha}{\theta_o - \gamma} \qquad (E26)$$

$$\Delta H = \gamma \frac{Ha}{\theta_o - \gamma} \qquad (E27)$$

qui détermine les paramètres du guidage selon l'invention en fonction des conditions imposées de l'atterrissage qui sont la pente de descente $\theta_o$ d'environ 3 degrés, l'angle de toucher $\gamma$ d'environ 1 degré et la hauteur de début d'arrondi Ha imposée par la conception du véhicule et fournie par son constructeur.

A titre d'exemple, pour une valeur de pente de descente $\theta_0$ de trois degrés et une valeur d'angle de toucher $\gamma$ d'un degré, la valeur de la profondeur $\Delta H$ du segment de guidage sous la piste est selon l'invention égale à la moitié de la valeur de début d'arrondi.

Ainsi pour une valeur réaliste de hauteur de début d'arrondi d'un avion moyen égale à 12,20 mètres (40 pieds), le guidage horizontal est enfoncé de 6,10 mètres (20 pieds) sous l'axe de piste et la distance de consigne est d'environ 360 mètres.

Cette distance de consigne d est celle qui s'applique pendant la phase terminale de l'atterrissage; la distance pendant la phase de descente peut être différente, et la distance pendant les phases de vol précédentes en altitude peut être encore différente.

Les évolutions de la loi de distance pourront être suffisamment régulières pour ne pas gêner la continuité du pilotage par des sauts de la distance de la consigne du guidage (qui se traduirait par un saut de la fenêtre de guidage sur l'écran).

Le guidage selon l'invention décrit ci-dessus permet de guider non seulement la manoeuvre d'approche mais aussi le début d'arrondi et l'arrondi lui même jusqu'à l'impact avec le sol sur la piste et il peut être étendu à la phase de roulage sur la piste à l'aide d'une consigne de guidage adaptée, correspondant au seul déplacement horizontal. Dans la phase de roulage après le point d'impact G, la trajectoire de guidage peut continuer à se situer au dessous de la piste ou revenir à l'axe de la piste puisque l'avion ne fait plus de manoeuvre en trois dimensions.

Lors du roulage, la direction de consigne est horizontale, suivant le segment PF, où le point F est sur l'axe de la piste à une distance prédéterminée d adaptée aux contraintes des manoeuvres du véhicule dans cette phase de roulage.

Etant donné que les directions de consigne représentées par le symbole de guidage doivent avoir un sens par rapport à l'oeil du pilote (pour la conformité avec la réalité), alors que l'oeil du pilote n'est pas dans le plan des roues de l'avion, on pourra corriger légèrement la position du symbole affiché, dans les phases finales d'atterrissage et dans les phases de roulage, pour donner l'impression la plus réaliste possible au pilote (le symbole de déplacement réel de l'avion se réfère à l'axe longitudinal de l'avion qui n'est pas situé à la hauteur du train d'atterrissage). La correction apportée, par exemple au moment de l'impact, pourra être une correction forfaitaire tenant compte de la géométrie de l'avion et de son assiette au moment de l'atterrissage.

Tout ce qui vient d'être dit à propos de l'assistance au pilotage est évidemment applicable dans un simulateur puisqu'on cherche dans un simulateur à reproduire exactement les conditions réelles vues par le pilote. La seule différence est que les données de position du véhicule sont fournies par calcul par le simulateur qui ne se déplace pas au lieu d'être fournies par des instruments de bord d'un véhicule qui se déplace.

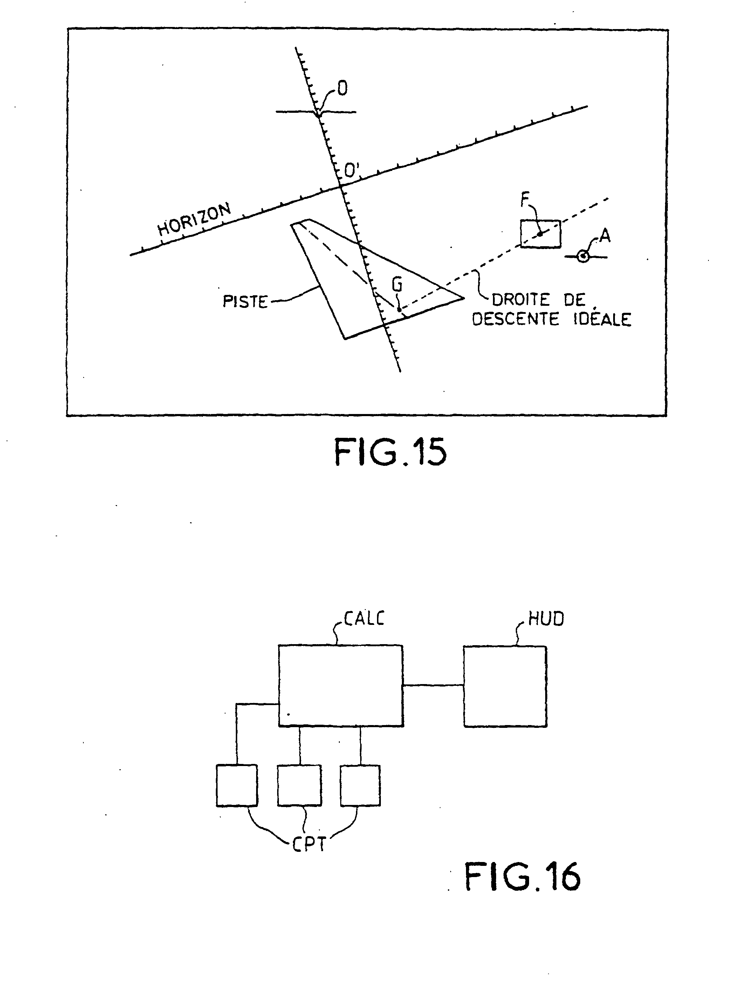

Pour terminer cette description, la figure 15 illustre une représentation fournie au pilote dans l'approche vers une piste d'atterrissage. La piste est représentée en perspective au dessous de la ligne d'horizon, le dispositif selon l'invention affiche une fenêtre de guidage centrée au point F qui est ici un point de la trajectoire idéale de descente, de sorte que le pilote peut facilement faire un lien mental concret entre cette fenêtre et la droite idéale qu'il doit rejoindre, c'est-à-dire sur l'écran la droite qui relie le centre de la fenêtre et le début de piste G.

L'invention sera bien entendu mise en oeuvre à l'aide d'un calculateur. Ce calculateur est de préférence, comme le montre la figure 16, le calculateur CALC qui contrôle un collimateur tête haute HUD et qui reçoit à cet effet des mesures en provenance de capteurs divers CPT embarqués dans l'avion, et notamment des capteurs fournissant des mesures de position, d'attitude, et de vitesse.

**Revendications**

1. Dispositif d'assistance au pilotage, ou à la simulation du pilotage, d'un véhicule, ce dispositif comportant des moyens de détermination de la position actuelle du véhicule, un générateur de symboles d'aide au pilotage, des moyens d'affichage de ces symboles, parmi lesquels un symbole de vecteur vitesse dont la position sur les moyens d'affichage représente la direction de déplacement du véhicule par rapport au sol et un symbole de guidage dont la position sur les moyens d'affichage représente une direction de consigne dans laquelle le véhicule devrait se déplacer pour rejoindre une trajectoire prédéterminée et des moyens de calcul de cette direction de consigne à partir de la position actuelle et d'informations sur ladite trajectoire prédéterminée, **caractérisé en ce que** la direction de consigne calculée par lesdits moyens de calcul est la direction F de la droite reliant la position actuelle du véhicule à un point de consigne situé sur une trajectoire de guidage T correspondant à ladite trajectoire prédéterminée et distant de ladite position P du véhicule d'une distance de consigne prédéterminée d.

2. Dispositif selon la revendication 1, **caractérisé en ce que** la trajectoire de guidage comprend au moins un segment de trajectoire théorique que le véhicule doit suivre ou rejoindre.

3. Dispositif selon la revendication 1, **caractérisé en ce que** la trajectoire de guidage comprend au moins un segment de trajectoire déduit par calcul d'un segment de trajectoire théorique que le véhicule doit suivre ou rejoindre.

4. Dispositif selon la revendication 3, **caractérisé en ce que** le segment de trajectoire déduit par calcul est un segment parallèle au segment de trajectoire théorique.

5. Dispositif selon la revendication 4, appliqué au cas de l'atterrissage d'un avion, **caractérisé en ce que** le segment de trajectoire théorique est l'axe d'une piste d'atterrissage et le segment de trajectoire de guidage correspondant est un segment parallèle à cet axe et situé sous la piste à une profondeur permettant un impact de l'avion sur la piste avec un angle prédéterminé non nul.

6. Dispositif selon l'une des revendications 1 à 5, **caractérisé en ce que** la trajectoire prédéterminée du véhicule est une représentation schématique d'une trajectoire réelle que le véhicule devrait suivre.

7. Dispositif selon la revendication 6, **caractérisé en ce que** la trajectoire prédéterminée est une suite de segments de droite brisés.

8. Dispositif selon l'une des revendications 1 à 7, **caractérisé en ce que** la distance prédéterminée d est modifiable d'une phase de vol à une autre.

9. Dispositif selon la revendication 8, **caractérisé en ce que** la distance prédéterminée d est modifiée de manière continue entre deux valeurs correspondant à deux phases de vol différentes afin d'éviter des sauts brusques de position du symbole de guidage sur l'écran de visualisation lors des changements de valeur de cette distance.

10. Dispositif selon l'une des revendications 1 à 9, appliqué à l'atterrissage d'un avion, **caractérisé en ce que** la trajectoire de guidage comporte au moins un segment de droite de descente idéale situé dans l'axe d'une piste d'atterrissage, et un segment de droite parallèle à l'axe de la piste, situé sous la piste dans un plan vertical contenant cet axe.

11. Dispositif selon l'une des revendications 1 à 10, **caractérisé en ce que** le symbole de guidage est affiché sur l'écran à une position dont les coordonnées sont définies dans un même repère de route et de pente que le symbole de vecteur vitesse de sorte que le véhicule se situe sur un segment de trajectoire souhaitée lorsque le symbole de vecteur vitesse est centré sur le centre du symbole de guidage.

12. Dispositif selon l'une des revendications, précédentes, **caractérisé en ce que** le symbole de guidage est constitué par une fenêtre rectangulaire.

13. Dispositif selon la revendication 12, **caractérisé en ce que** la fenêtre rectangulaire a des dimensions correspondant à un écart de position maximal toléré par rapport à un segment de trajectoire théorique idéal que le véhicule doit suivre, de telle sorte que si le centre du symbole de vecteur vitesse reste situé dans la fenêtre, on est assuré que le véhicule est à l'intérieur de la limite d'écart autorisé.

**Patentansprüche**

1. Vorrichtung zur Unterstützung der Steuerung oder der Simulation der Steuerung eines Fahrzeugs, wobei diese Vorrichtung versehen ist mit Mitteln zum Bestimmen der momentanen Position des Fahrzeugs, einem Generator für Steuerungshilfssymbole, Mitteln zum Anzeigen dieser Symbole, wovon eines ein Geschwindigkeitsvektorsymbol ist, dessen Position auf den Anzeigemitteln die Richtung der Bewegung des Fahrzeugs in Bezug auf den Boden repräsentiert, und eines ein Führungssymbol ist, dessen Position auf den Anzeigemitteln eine Soll-Richtung repräsentiert, in der sich das Fahrzeug bewegen sollte, um sich einer vorgegebenen Bahn anzunähern, und Mitteln zum Berechnen dieser Soll-Richtung anhand der Ist-Position und anhand von Informationen über die vorgegebene Bahn, **dadurch gekennzeichnet, dass** die von den Rechenmitteln berechnete Soll-Richtung die Richtung F der Geraden ist, die die Ist-Position des Fahrzeugs mit einem Soll-Punkt verbindet, der sich auf einer der vorgegebenen Bahn entsprechenden Führungsbahn T befindet und von der Position P des Fahrzeugs um einen vorgegebenen Sollabstand d beabstandet ist.

2. Vorrichtung nach Anspruch 1, **dadurch gekennzeichnet, dass** die Führungsbahn wenigstens ein theoretisches Bahnsegment umfasst, dem das Fahrzeug folgen oder an das es sich annähern soll.

3. Vorrichtung nach Anspruch 1, **dadurch gekennzeichnet, dass** die Führungsbahn wenigstens ein Bahnsegment umfasst, das durch Rechnung von einem theoretischen Bahnsegment abgeleitet ist, dem das Fahrzeug folgen oder an das es sich annähern soll.

4. Vorrichtung nach Anspruch 3, **dadurch gekennzeichnet, dass** das Bahnsegment, das durch Rechnung abgeleitet wird, ein zu dem theoretischen Bahnsegment paralleles Segment ist.

5. Vorrichtung nach Anspruch 4, die auf den Fall der Landung eines Flugzeugs angewendet wird, **dadurch gekennzeichnet, dass** das theoretische Bahnsegment die Achse einer Landepiste ist und das Führungsbahnsegment einem zu dieser Achse parallelen Segment entspricht und sich unter der Piste bei einer Tiefe befindet, die ein Aufsetzen des Flugzeugs auf der Piste mit einem von null verschiedenen vorgegebenen Winkel ermöglicht.

6. Vorrichtung nach einem der Ansprüche 1 bis 5, **dadurch gekennzeichnet, dass** die vorgegebene Bahn des Fahrzeugs eine schematische Darstellung einer wirklichen Bahn ist, der das Fahrzeug folgen sollte.

7. Vorrichtung nach Anspruch 6, **dadurch gekennzeichnet, dass** die vorgegebene Bahn eine Folge von abgeteilten Geradensegmenten ist.

8. Vorrichtung nach einem der Ansprüche 1 bis 7, **dadurch gekennzeichnet, dass** der vorgegebene Abstand d von einer Flugphase zur nächsten modifiziert werden kann.

9. Vorrichtung nach Anspruch 8, **dadurch gekennzeichnet, dass** der vorgegebene Abstand d zwischen zwei Werten, die zwei verschiedenen Flugphasen entsprechen, kontinuierlich modifiziert wird, um bei Änderungen des Wertes dieses Abstands plötzliche Sprünge der Position des Führungssymbols auf dem Anzeigeschirm zu vermeiden.

10. Vorrichtung nach einem der Ansprüche 1 bis 9, die auf die Landung eines Flugzeugs angewendet wird, **dadurch gekennzeichnet, dass** die Führungsbahn wenigstens ein ideales Sink-Geradensegment, das sich auf der Achse einer Landepiste befindet, und ein zu der Achse der Piste paralleles Geradensegment, das sich unter der Piste in einer diese Achse enthaltenden vertikalen Ebene befindet, umfasst.

11. Vorrichtung nach einem der Ansprüche 1 bis 10, **dadurch gekennzeichnet, dass** das Führungssymbol auf dem Schirm an einer Position angezeigt wird, deren Koordinaten in demselben Kurs- und Neigungsbezugssystem definiert sind wie das Geschwindigkeitsvektorsymbol, so dass sich das Fahrzeug auf einem gewünschten Bahnsegment befindet, wenn das Geschwindigkeitsvektorsymbol auf die Mitte des Führungssymbols zentriert ist.

12. Vorrichtung nach einem der vorhergehenden Ansprüche, **dadurch gekennzeichnet, dass** das Führungssymbol durch ein rechtwinkliges Fenster gebildet ist.

13. Vorrichtung nach Anspruch 12, **dadurch gekennzeichnet, dass** das rechtwinklige Fenster Abmessungen besitzt, die einem höchstens tolerierbaren Positionsabstand zu einem idealen theoretischen Bahnsegment, dem das Fahrzeug folgen soll, entsprechen, derart, dass dann, wenn das Zentrum des Geschwindigkeitvektorsymbols in dem Fenster bleibt, sichergestellt ist, dass das Fahrzeug innerhalb der zulässigen Abstandsgrenze ist.

**Claims**

1. Device for assisting the piloting, or the simulation of the piloting, of a vehicle, this device comprising means for determining the current position of the vehicle, a generator of symbols for aiding piloting, means for displaying these symbols, which include a velocity vector symbol whose position on the display means represents the direction of movement of the vehicle with respect to the ground and a guidance symbol whose position on the display means represents a datum direction in which the vehicle ought to move so as to join up with a predetermined path and means for computing this datum direction from the current position and from information about the said predetermined path, **characterized in that** the datum direction computed by the said computing means is the direction F of the straight line connecting the current position of the vehicle to a datum point situated on a guidance path T corresponding to the said predetermined path and a predetermined datum distance d away from the said position P of the vehicle.

2. Device according to Claim 1, **characterized in that** the guidance path comprises at least one theoretical path segment which the vehicle should follow or join up with.

3. Device according to Claim 1, **characterized in that** the guidance path comprises at least one path segment deduced by computing a theoretical path segment which the vehicle should follow or join up with.

4. Device according to Claim 3, **characterized in that** the path segment deduced by computation is a segment parallel to the theoretical path segment.

5. Device according to Claim 4, applied to the case of the landing of an aircraft, **characterized in that** the theoretical path segment is the axis of a runway and the corresponding guidance path segment is a segment parallel to this axis and situated under the runway at a depth allowing impact of the aircraft on the runway at a non-zero predetermined angle.

6. Device according to one of Claims 1 to 5, **characterized in that** the predetermined path of the vehicle is a diagrammatic representation of a real path which the vehicle ought to follow.

7. Device according to Claim 6, **characterized in that** the predetermined path is a string of broken straight-line segments.

8. Device according to one of Claims 1 to 7, **characterized in that** the predetermined distance d is modifiable from one flight phase to another.

9. Device according to Claim 8, **characterized in that** the predetermined distance d is modified continuously between two values corresponding to two different flight phases so as to avoid abrupt jumps in the position of the guidance symbol on the display screen during changes in the value of this distance.

10. Device according to one of Claims 1 to 9, applied to the landing of an aircraft, **characterized in that** the guidance path comprises at least one ideal descent straight-line segment situated along the axis of a runway, and a straight-line segment parallel to the axis of the runway, situated under the runway in a vertical plane containing this axis.

11. Device according to one of Claims 1 to 10, **characterized in that** the guidance symbol is displayed on the screen at a position whose co-ordinates are defined in one and the same track and slope reference frame as the velocity vector symbol so that the vehicle is situated on a desired path segment when the velocity vector symbol is centred on the centre of the guidance symbol.

12. Device according to one of the preceding claims, **characterized in that** the guidance symbol consists of a rectangular window.

13. Device according to Claim 12, **characterized in that** the rectangular window has dimensions corresponding to a maximum tolerated deviation in position with respect to an ideal theoretical path segment which the vehicle must follow, so that if the centre of the velocity vector symbol remains situated in the window, then the vehicle is definitely inside the limit of permitted deviation.

FIG.1

FIG.2

FIG.3

FIG.4

FIG.5

FIG.6

FIG.7

FIG.8

EP 0 916 073 B1

FIG.9

FIG.10

20

FIG.11

FIG.12

FIG.13

FIG.14

FIG.15

FIG.16